# EUROPÄISCHE PATENTSCHRIFT

(11) **EP 1 668 934 B1**
(45) Veröffentlichungstag und Bekanntmachung des Hinweises auf die Patenterteilung: **18.07.2018**
(21) Anmeldenummer: 04766641.7
(22) Anmeldetag: 30.08.2004
(51) Int. Cl.: H04W 28/06, H04W 72/04, H04W 72/12, H04W 28/02

(54) **VERFAHREN, SYSTEM UND COMPUTERPROGRAMMPRODUKT ZUR ÜBERTRAGUNG VON DATEN**
METHOD, SYSTEM AND COMPUTER PROGRAM PRODUCT FOR THE TRANSMISSION OF DATA
PROCÉDÉ, SYSTÈME ET PRODUIT PROGRAMME D'ORDINATEUR DE TRANSMISSION DE DONNÉES

(30) Priorität: 29.09.2003 DE 10345220
(43) Veröffentlichungstag der Anmeldung: 14.06.2006
(60) Teilanmeldung: 16191821.4
(73) Patentinhaber: Intel Deutschland GmbH, 85579 Neubiberg (DE)
(72) Erfinder: CHOI, Hyung-Nam, 22117 Hamburg (DE)
(74) Vertreter: Goddar, Heinz J.
(86) Internationale Anmeldenummer: PCT/EP2004/051958
(87) Internationale Veröffentlichungsnummer: WO 2005/034542

(56) Entgegenhaltungen:
- WO-A-2004/073273
- US-A1- 2004 228 313
- "Universal Mobile Telecommunication System (UMTS); Medium Access Control (MAC) protocol specification (3GPP TS 25.321 version 5.6.0 Release 5)" ETSI TECHNICAL SPECIFICATION, 1. September 2003 (2003-09-01), Seiten 1-56, XP002317932 SOPHIA ANTIPOLIS, FRANCE in der Anmeldung erwähnt

## Beschreibung

Die vorliegende Erfindung betrifft ein Verfahren zur Übertragung von Daten von einem Versender an einen Empfänger, wobei das Verfahren nach dem Universal Mobile Telecommunications System-Standard arbeitet, kurz UMTS-Standard. Ferner betrifft die vorliegende Erfindung ein dementsprechendes Kommunikationssystem und ein Computerprogrammprodukt.

Unter dem Begriff der Daten wird im Rahmen der vorliegenden Erfindung jede Form von Information und/oder Nachricht zu Signalisierungszwecken und anwendungsbezogenen Nutzerdaten verstanden. Dementsprechend ist auch der Begriff der Kommunikation als Datenübertragung in dem vorstehend angedeuteten weiten Bereich zu verstehen.

Die UMTS-Funkschnittstelle ist in drei Protokollschichten gegliedert: die physikalische Schicht als Schicht 1, die Datenverbindungsschicht bestehend aus MAC, RLC, BMC, PDCP als Schicht 2 und die Netzwerkschicht mit RRC als Schicht 3. Innerhalb der Protokollstruktur der UMTS-Luftschnittstelle ist eine Funk-Ressourcen-Kontrolle RRC in der FunknetzwerkKontrolleinheit RNC für die Kontrolle und Vergabe der Funkressourcen für alle in einer Funkzelle befindlichen Teilnehmergeräte verantwortlich. Das Ressourcen-Management erfolgt derzeit auf relativ langsamer Zeitbasis, weil die entsprechenden Signalisierungen zwischen den Teilnehmergeräten und der RNC über die RRC-Nachrichten erfolgen.

Eine wesentliche Aufgabe der MAC-d Einheit in der MAC-Schicht im Sender ist es, im Sendefall die Daten, die über die dedizierten logischen Kanäle oberhalb der MAC-Schicht anliegen, auf die dedizierten Transportkanäle der physikalischen Schicht abzubilden bzw. im Empfänger die auf den dedizierten Transportkanälen empfangenen Daten auf die dedizierten logischen Kanäle zu verteilen. Im Empfangsfall verteilt die MAC-d Einheit die über die dedizierten Transportkanäle empfangenen Daten wieder auf die jeweiligen dedizierten logischen Kanäle. Auf den Transportkanälen werden die Daten in Form von Paketeinheiten fester Länge übertragen, den sog. Transportblöcken. Im Hinblick auf die weitere Standardisierung und Fortentwicklung von UMTS innerhalb der Third Generation Partnership Project- bzw. 3GPP-Gremien werden Verbesserungen zur schnellen und effizienten Datenübertragung über den dedizierten Transportkanal untersucht. Das Dokument US 2003/0039270 A1 offenbart eine Signalisierung zwischen MAC-hs Einheiten eines Netzwekes und einer Benutzerstation. Es ist Aufgabe der vorliegenden Erfindung, ein Datenübertragungsverfahren nach dem UMTS-Standard dahingehend zu verbessern, dass die Datenübertragung beschleunigt wird. Diese Aufgabe wird durch ein Verfahren gemäß Patentanspruch 1 und durch ein Kommunikationssystem gemäß Patentanspruch 21 und ein Computerprogrammprodukt gemäss Anspruch 24 gelöst. Erfindungsgemäß ist bei einem vorgeschlagenen Verfahren eine Inband-Signalisierung von Informationen auf der MAC- Schichtebene vorgesehen, die für die UMTS-Basisstation relevant sind. Damit wird eine schnelle und effiziente Signalisierung zwischen einem Teilnehmer-Endgerät UE und einer jeweiligen UMTS-Basisstation auf der MAC-Schichtebene realisiert. In der MAC-Schichtebene ist es somit erfindungsgemäß möglich, zwischen Daten- Transportblöcke und Signalisierungs- Transportblöcke zu differenzieren und diese jeweils unterschiedlich zu behandeln. Damit können in gewohnter Weise Nutzdaten und RRC-Signalisierungsdaten zwischen Teilnehmer-Endgerät und Basisstation ausgetauscht werden, während zusätzlich für die Basisstation relevante Signalisierungsdaten nur noch zwischen Teilnehmer-Endgerät und der Basisstation ausgetauscht werden. Hierdurch wird die Datenübertragung insbesondere in der Uplink-Richtung beschleunigt, also von einem TeilnehmerEndgerät zu einem Netzwerk bzw. der Basisstation als Teil eines nachfolgenden Netzwerks hin.

Damit werden in einer Architektur eines entsprechenden Kommunikationssystems erfindungsgemäß RRC-Funktionalitäten in Form mindestens eines Kontroll- und/oder Datenverarbeitungsmittels aus dem RNC hin in die Basisstation verlagert. Die weiteren abhängigen Ansprüche enthalten jeweils ebenfalls besonders vorteilhafte Ausgestaltungen und Weiterbildungen der Erfindung, die strukturkonform zu dem bestehenden UMTS-Standard ausgebildet sind. Dazu wird insbesondere eine geeignete Signalisierung geschaffen, indem in der Basisstation und dem Teilnehmer-Endgerät entsprechende Signalisierungsmittel vorgesehen sind. Es werden ferner spezielle Signalisierungs-Transportblöcke geschaffen und zwei verschiedene Transportblock-Formate, wie unter Bezug auf ein Ausführungsbeispiel noch im Detail dargestellt wird.

Die Erfindung wird im Folgenden unter Hinweis auf die beigefügten Figuren anhand von Ausführungsbeispielen unter Bezugnahme auf den Stand der Technik näher erläutert. Es zeigen in schematisierter Art in Prinzip-Darstellungen:
- Figur 1: Komponenten eines Funkkommunikationssystems nach dem UMTS-Standard,
- Figur 2: eine Protokollstruktur der UMTS-Luftschnittstelle,
- Figur 3: eine Architektur der MAC-d Einheit auf UE-Seite,
- Figur 4: ein Uplink-Übertragungsszenario,
- Figur 5: eine Abbildung der Daten von Transportkanälen auf die physikalischen Kanäle,
- Figur 6: eine erweiterte Protokollstruktur der UMTS- Luftschnittstelle,
- Figur 7: Transportblock-Formate,
- Figur 8: ein MAC SDU-Format im Fall SignalisierungsTransportblock,
- Figur 9: eine Inband-Signalisierung,
- Figur 10: ein Signalisierungsablauf in der MAC-Schicht nach Ausführungsbeispiel 1 in Downlink-Richtung und
- Figur 11: ein Signalisierungsablauf in der MAC-Schicht nach Ausführungsbeispiel 2 Uplink-Richtung.

Ferner wird Bezug auf folgende Tabellen genommen:
- Tabelle 1: Parameter für die Signaling Radio Bearer;
- Tabelle 2: Parameter für die Radio Bearer;
- Tabelle 3: Konfiguration der erlaubten TransportformatKombinationen;
- Tabelle 4: Parameter für die Radio Bearer nach Ausführungsbeispiel und
- Tabelle 5: Konfiguration der erlaubten TransportformatKombinationen nach Ausführungsbeispiel.

In den Figuren und den weiteren Erläuterungen werden einheitlich für gleiche Teile, Funktionsblöcke, Schichten etc. die gleichen Bezugszeichen und Abkürzungen verwendet. Aufgrund der auf internationaler Ebenen voranschreitenden Standardisierung sind die Fachbegriffe und Bezeichnungen überwiegend aus dem angelsächsischen Sprachraum entlehnt. Da es sich um Fachbegriffe handelt, die dem Fachmann in diesem Bereich der Technik geläufig sind, und in Ermangelung eingeführter oder griffiger Deutsche Bezeichnungen werden diese Begriffe nicht weiter ins Deutsche übersetzt.

Vor dem Hintergrund einer Effizienz und Geschwindigkeitssteigerung wird erfindungsgemäß eine Lösung vorgeschlagen, in der auf der MAC-Schichtebene über spezielle Signalisierungs-Transportblöcke nur Basisstation-relevante Informationen zwischen einer Basisstation und einem Teilnehmergerät ausgetauscht werden können. Eine erfindungsgemäße Basisstation verfügt also ebenfalls über Funktionen zur Ressourcen-Management, z.B. zur Rekonfiguration der physikalischen Kanäle oder zum Umschalten des Typs von Transportkanälen. Hierzu werden auch neue Mechanismen der Signalisierung zwischen einer Basisstation und einem Teilnehmergerät definiert und nachfolgend beschrieben, damit die Basisstation das Funkressourcen-Management möglichst schnell und effizient durchführen kann.

Zur leichteren Orientierung werden zu Beginn Grundlagen zur Netz- und Protokollarchitektur nach dem UMTS-Standard erläutert:

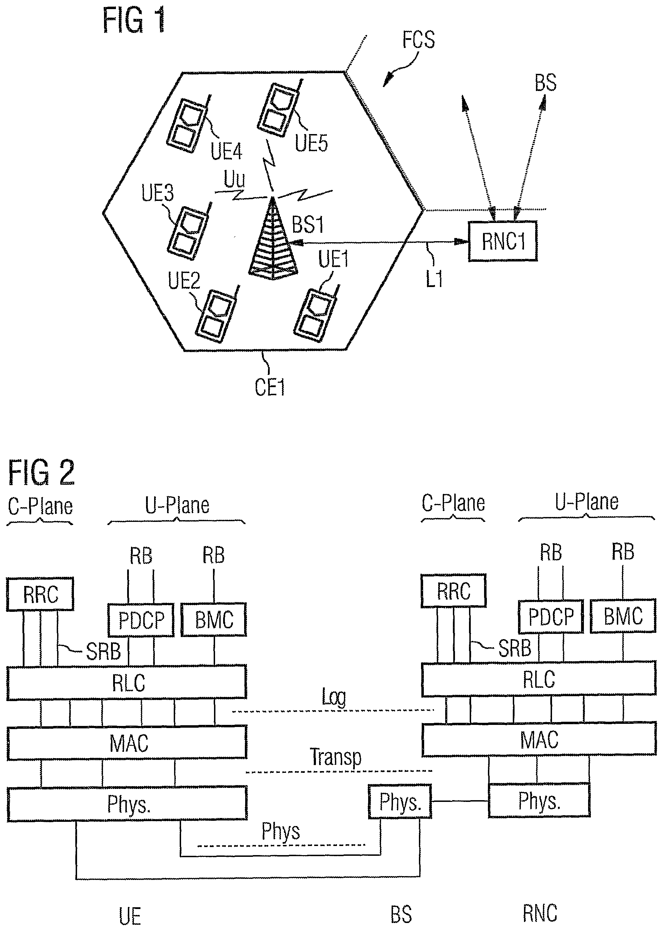

Figur 1 zeigt hierzu in schematischer Darstellung beispielhaft die Komponenten eines Funkkommunikationssystems FCS, das nach dem Universal Mobile Telecommunications System- bzw. UMTS-Standard betrieben wird. Es besteht aus einer Funkzelle CE1, einer Basisstation BS1 und einer übergeordneten Funknetzwerk-Kontrolleinheit RNC1. Die Basisstation BS1 wird über eine zugehörige Datenleitung L1 von der übergeordneten Funknetzwerk-Kontrolleinheit RNC1 aus gesteuert bzw. kontrolliert. Diese überwacht die Zuordnung von Funkressourcen in der Funkzelle CE1, die von der Basisstation BS1 funktechnisch aufgespannt wird. Die Basisstation BS1 steht dabei stellvertretend für eine Vielzahl von weiteren, in der Figur 1 nicht im Detail dargestellten Basisstationen BS des Funkkommunikationssystems FCS, die entsprechende Funkzellen CE aufweisen und abdecken.

Zwischen der Basisstation BS1 und einem Funkkommunikationsgerät, hier einem der Mobilfunktelefone UE1 - UE5, in der Funkzelle CE1 werden Nachrichten- und/oder Datensignale über mindestens eine vordefinierte Luftschnittstelle Uu nach einem Vielfachzugriffs-Übertragungsverfahren übertragen. Beispielsweise wird im UMTS Frequency Division Duplex bzw. FDD-Modus eine getrennte Signalübertragung in Up- und Downlink-Richtung durch eine entsprechende separate Zuweisung von Frequenzen oder Frequenzbereichen erreicht. Uplink bezeichnet dabei eine Signalübertragung vom Teilnehmergerät zur jeweiligen Basisstation, Downlink eine Signalübertragung von der jeweilig zugeordneten Basisstation zum Teilnehmergerät. Mehrere Teilnehmer bzw. Mobilfunktelefone UE1 - UE5 in derselben Funkzelle CE1 werden vorzugsweise über orthogonale Codes, insbesondere nach dem sogenannten Code Division Multiple Access- bzw. CDMA-Verfahren getrennt. Im vorliegenden Ausführungsbeispiel halten sich in der Funkzelle CE1 der Basisstation BS1 eine Vielzahl von Teilnehmergeräten UE1, UE2, UE3, UE4 und UE5 auf.

Die UMTS-Luftschnittstelle Uu ist in drei Protokollschichten gegliedert. Figur 2 zeigt die Protokollstruktur aus Sicht des dedizierten Transportkanals bzw. Dedicated Channels DCH. Die unterste Schicht ist die physikalische Schicht, Schicht 1. Die darüberliegende Schicht ist die Datenverbindungsschicht, Schicht 2, bestehend aus MAC, RLC, BMC und PDCP, und die oberste Schicht ist die Netzwerkschicht mit dem RRC, Schicht 3. Diese Architektur liegt sowohl im Teilnehmergerät UE als auch im UMTS-Netzwerk vor, bezeichnet auch als UMTS Terrestrial Radio Access Network bzw. UTRAN, bestehend aus den Basisstationen BS und der Funknetzwerk-Kontrolleinheiten RNC. Jede Protokollschicht bietet der über ihr liegenden Schicht ihre Dienste über definierte Dienstzugangspunkte an. Diese Dienstzugangspunkte werden zum besseren Verständnis der Architektur mit allgemein gebräuchlichen und eindeutigen Namen versehen, wie z.B. logische Kanäle, Transportkanäle, Radio Bearer RB, Signaling Radio Bearer SRB.

Die in Figur 2 dargestellte Protokollarchitektur ist dabei nicht nur horizontal in die schon erwähnten Schichten und Einheiten aufgeteilt, sondern auch vertikal in die KontrollEbene C-plane, bestehend aus der physikalischen Schicht, MAC, RLC und RRC, sowie die Nutzer-Ebene U-plane, bestehend aus der physikalischen Schicht, MAC, RLC, PDCP und BMC. Über die C-plane werden ausschließlich Kontroll-Daten übertragen, die zum Aufbau und zur Aufrechterhaltung einer Verbindung benötigt werden, wohingegen über die U-plane die eigentlichen Nutzdaten transportiert werden.

Jede Protokollschicht oder Protokolleinheit hat bestimmte Funktionen. Details zur Protokollarchitektur sind in [1] beschrieben. Netzwerkseitig befindet sich die physikalische Schicht in der jeweiligen Basisstation und Funknetzwerk- Kontrolleinheit, während sich die MAC, RLC, PDCP, BMC und RRC nur in der Funknetzwerk-Kontrolleinheit befinden.

Senderseitig ist die Aufgabe der physikalischen Schicht Phys die sichere Übertragung der von der MAC-Schicht kommenden Daten über die Luftschnittstelle Uu zu gewährleisten. Die Daten werden hierbei auf die jeweiligen physikalischen Kanäle Phy abgebildet. Die physikalische Schicht Phys bietet ihre Dienste der MAC-Schicht über Transportkanäle an, die festlegen wie und mit welcher Charakteristik die Daten über die Luftschnittstelle Uu transportiert werden sollen. Die wesentlichen Funktionen der physikalischen Schicht Phys beinhalten die Kanalcodierung, die Modulation und die CDMA- Codespreizung. Entsprechend führt die physikalische Schicht Phys auf der Empfängerseite die CDMA-Codeentspreizung, die Demodulation und die Decodierung der empfangenen Daten durch und gibt diese dann an die MAC-Schicht zur weiteren Verarbeitung weiter.

Die MAC-Schicht bietet ihre Dienste der RLC-Schicht über logische Kanäle Log an, die charakterisieren, um welchen Datentyp es sich bei den transportierten Daten handelt. Die Aufgabe der MAC-Schicht im Sender ist es, die Daten, die an einem logischen Kanal Log oberhalb der MAC-Schicht anliegen, auf die Transportkanäle Transp der physikalischen Schicht Phys abzubilden. Die physikalische Schicht Phys bietet den Transportkanälen hierzu unterschiedliche Übertragungsraten an. Daher ist einer der wesentlichen Funktionen der MAC-Schicht im Sender die Auswahl eines geeigneten Transportformates TF für jeden konfigurierten Transportkanal Transp in Abhängigkeit von der momentanen Übertragungsrate, der Sendeleistung und der Datenpriorität der logischen Kanäle Log, die auf diesen Transportkanal Transp abgebildet sind. Im Detail legt ein Transportformat TF fest, wie viele MAC-Paketeinheiten, bezeichnet als Transportblock, pro Übertragungszeitlänge Transmission Time Interval TTI über den Transportkanal Transp an die physikalische Schicht Phys gesendet werden. Im Empfänger verteilt die MAC-Schicht die auf den Transportkanälen Transp empfangenen Transportblöcke auf die logischen Kanäle Log. Die MAC-Schicht besteht aus drei logischen Einheiten.

Die MAC-d Einheit behandelt die Nutz- und Kontrolldaten, die über die entsprechenden dedizierten logischen Kanäle Dedicated Traffic Channel DTCH und Dedicated Control Channel DCCH auf die dedizierten Transportkanäle DCH abgebildet werden. Die MAC-control/shared bzw. MAC-c/sh-Einheit behandelt die Nutz- und Kontrolldaten von logischen Kanälen, die auf die gemeinsamen Transportkanäle, wie z.B. RACH im Uplink oder FACH im Downlink, abgebildet werden. Die MAC-broadcast- bzw. MAC-b Einheit behandelt nur die Funkzell-relevanten Systeminformationen, die über den logischen Kanal Broadcast Control Channel BCCH auf den Transportkanal Broadcast Channel BCH per Broadcast zu allen UEs in der jeweiligen Funkzelle übertragen werden.

Die RLC-Schicht bietet ihre Dienste im Fall von RRC über die Signaling Radio Bearer SRB an. Im Fall von PDCP und BMC erfolgt dies über die Radio Bearer RB. Die SRB bzw. RB charakterisieren, wie die RLC-Schicht mit den Datenpaketen umzugehen hat. Hierzu wird beispielsweise von der RRC-Schicht der Übertragungsmodus für jeden konfigurierten SRB bzw. RB festgelegt: Transparent Mode TM, Unacknowledged Mode UM oder Acknowledged Mode AM. Die RLC-Schicht ist dabei so modelliert, dass es eine eigenständige RLC-Entität pro RB bzw. SRB gibt. Des weiteren ist die Aufgabe des RLC-Protokolls im Sender, die Nutz- und Signalisierungsdaten von RBs bzw. SRBs in Pakete zu teilen oder zusammenzufügen. Im Fall der Übertragungsmodi UM und AM speichert die jeweilige RLC-Entität die Kopien von den an einem RB bzw. SRB anliegenden Datenpakete solange in einem RLC-Sendebuffer, bis diese von der unter RLC liegenden Schichten erfolgreich über die Luftschnittstelle Uu transportiert werden konnten. Die RLC-Schicht übergibt die nach der Teilung oder dem Zusammenfügen entstandenen Datenpakete der MAC-Schicht zum weiteren Transport.

Für den Auf- und Abbau, die Umkonfiguration von physikalischen Kanälen Phy , Transportkanälen Transp, logischen Kanälen Log, Signaling Radio Bearer und Radio Bearer, sowie das Aushandeln aller Parameter der Schicht 1 und 2-Protokolle ist das RRC-Protokoll verantwortlich. Hierzu tauschen sich die RRC-Einheiten im RNC und UE über die SRBs entsprechende RRC-Nachrichten aus. Für Details der RRC-Schicht siehe [2].

Das PDCP-Protokoll ist nur für die Übertragung von Daten des Packet-Switched Domain bzw. PS-Domain zuständig. Seine Hauptfunktion ist die Komprimierung oder Dekomprimierung der IP-Header-Informationen. Das BMC-Protokoll wird auf der Netzwerkseite verwendet, um über die Luftschnittstelle Uu sog. Cell Broadcast-Nachrichten zu übertragen.

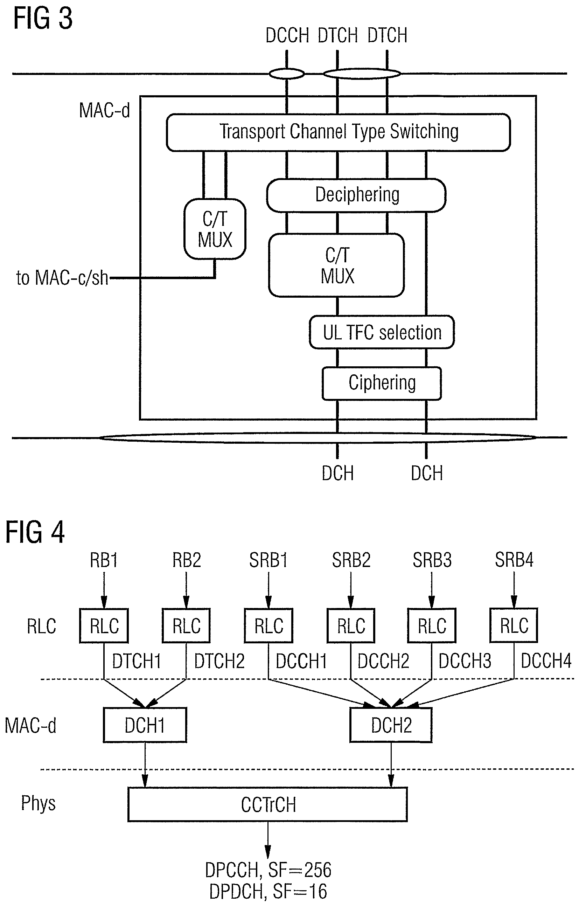

Nun werden Grundlagen zur Funktion der MAC-d Einheit dargestellt:
Die MAC-d Einheit in der MAC-Schicht behandelt die Nutz- und Kontrolldaten, die über die entsprechenden dedizierten logischen Kanäle bzw. Dedicated Traffic Channel DTCH und Dedicated Control Channel DCCH auf die dedizierten Transportkanäle DCH abgebildet werden. Details hierzu sind in [3] beschrieben. In Figur 3 ist beispielhaft die Architektur der MAC-d Einheit auf der UE-Seite dargestellt:
- Falls von RRC konfiguriert, werden durch den Block Transport Channel Type Switching die Nutz- und Kontrolldaten von DTCH und DCCH auf gemeinsame Transportkanäle, wie beispielsweise den RACH, abgebildet und zu deren weiteren Verarbeitung zur MAC-c/sh Einheit weitergeleitet.
- C/T MUX wird angewendet, wenn ein Multiplexing von mehreren dedizierten logischen Kanälen auf denselben Transportkanal durchgeführt wird. In diesem Fall werden den Datenpaketen von den jeweiligen logischen Kanälen zur eindeutigen Identifikation ein 4-Bit langes C/T-Feld als MAC-Header hinzugefügt, in der die Identität des logischen Kanals eingetragen ist. Hiermit kann die MAC-d Einheit auf der Empfängerseite eindeutig erkennen, von welchem logischen Kanal die empfangenen Daten stammen.
- Im Fall des RLC-Übertragungsmodus Transparent Mode, TM, werden die Datenpakete im Sendefall verschlüsselt, Ciphering, oder im Empfangsfall entschlüsselt, Deciphering.
- Aufgabe des Blocks UL TFC selection ist das Uplink-Scheduling, d.h. die Auswahl einer geeigneten Transportformat-Kombination TFC für alle konfigurierten DCH in Abhängigkeit von der momentanen Übertragungsrate, der Sendeleistung und der Datenpriorität der dedizierten logischen Kanäle, die auf den Transportkanälen abgebildet sind.

Zum besseren Verständnis der protokollmäßigen Zusammenhänge wird im folgenden ein Beispiel erläutert. Hierzu wird ein Szenario angenommen, in der das Teilnehmergerät UE1 in der Funkzelle CE1 zwei Paketdienste im Uplink von jeweils 64 kbps Datenrate parallel nutzt, beispielsweise für Internet-Browsing und Streaming von Daten. Aufgrund der aktuellen Verkehrssituation in der Funkzelle CE1 und der angefragten Dienstqualität Quality of Service QoS wurden der UE1 von der RRC-Schicht im RNC1 dedizierte Funkressourcen allokiert. Im Detail wurde von der RRC-Schicht im RNC1 für den Downlink und Uplink die einzelnen Protokollschichten oder Protokolleinheiten auf der Weise konfiguriert, so dass eine bestimmte Dienstqualität, wie z.B. eine bestimmte garantierte bzw. maximale Datenrate und/oder eine bestimmte Übertragungsverzögerung, während der Dauer der Mobilfunkverbindung durch die Protokolle der Schicht 1 und 2 gewährleistet werden soll. Die von der RNC1 spezifizierte Konfiguration wird dann der RRC-Schicht im Teilnehmergerät UE1 signalisiert.

In Figur 4 ist ein Konfigurationsbeispiel für das betrachtete Uplink-Übertragungsszenario illustriert. In der U-plane sind zwei RBs spezifiziert, d.h. RB1 und RB2, über der die Nutzdaten des jeweiligen Paketdienstes übertragen werden. Jeder RB wird in der RLC-Schicht auf eine RLC-Entität und logischen Verkehrskanal DTCH abgebildet. In der C-plane sind aufgrund der unterschiedlichen Arten von Kontroll-Nachrichten vier SRBs SRB1 bis SRB4 von jeweils 3.4 kbps Datenrate spezifiziert, die jeweils in der RLC-Schicht auf eine RLC-Entität und logischen Kontrollkanal DCCH abgebildet sind. In der MAC-d Einheit sind zwei Transportkanäle DCH1 und DCH2 konfiguriert, wobei in der U-plane die beiden logischen Verkehrskanäle DTCH1 und DTCH2 auf den Transportkanal DCH1 und in der C-plane die vier logischen Kontrollkanäle DCCH1 bis DCCH4 auf den Transportkanal DCH2 multiplext sind. In der physikalischen Schicht werden die beiden Transportkanäle kanalcodiert und auf einen Funkzeitrahmen Coded Composite Transport Channel bzw. CCTrCH der Länge 10ms multiplext. Basierend auf der Funkübertragungstechnologie FDD werden die Daten auf dem CCTrCH nach Spreizung und Modulation über den Dedicated Physical Data Channel DPDCH mit SF=16 über die Luftschnittstelle Uu zu UTRAN gesendet. Parallel dazu werden spezifische Kontrollinformationen der physikalischen Schicht auf dem Dedicated Physical Control Channel DPCCH mit dem Spreizfaktor SF=256 gesendet, damit die physikalische Schicht in der Basisstation BS1 nach der Decodierung der Kontrollinformationen auf dem DPCCH auch die Daten auf dem DPDCH korrekt decodieren kann.

In den Tabellen 1 bis 3 sind die konfigurierten Parameter für die Signaling Radio Bearer, Radio Bearer sowie die erlaubten Transportformat-Kombinationen zusammengefasst. Zur Abarbeitung der Datenpakete in den Sendebuffern der jeweiligen RLC-Entitäten sind den logischen Kanälen verschiedene Prioritäten von 1 bis 8 zugewiesen, wobei eine Priorität von 1 die höchste Priorität und eine Priorität von 8 die niedrigste Priorität darstellt. Auf Basis dieser Prioritäten werden die Datenpakete von den logischen Kanälen bevorzugt, die eine höhere Priorität aufweisen. Im Falle einer Pattsituation, d.h. beide oder mehrere logische Kanäle auf denselben Transportkanal haben die gleiche Priorität, wird als weiteres Kriterium die jeweilige Belegung des Sendebuffers Buffer Occupancy BO berücksichtigt. Falls im Fall gleicher Priorität von beispielsweise zwei logischen Kanälen auf denselben Transportkanal also der Bufferstand vom logischen Kanal 1 höher ist als der vom logischen Kanal 2, dann werden die Daten vom Kanal 1 zuerst abgearbeitet.

Für den Transportkanal DCH1 sind fünf Transportformate TF0 bis TF4 in der Transport Format Set TFS konfiguriert. So legt das Transportformat TF2 fest, dass pro Übertragungszeitlänge Transmission Time Interval TTI von 20ms zwei Transportblöcke TB der Größe 340 Bits über den DCH1 an die physikalische Schicht gesendet wird. Dort wird jedem Transportblock zur Fehlererkennung 16 CRC-Prüfsummenbits angehängt. Beide Transportblöcke werden daraufhin gemeinsam durch einen Turbocoder der Coderate 1/3 kanalcodiert, um sie vor Übertragungsfehler, die durch den Übertragungskanal verursacht werden können, zu schützen. Für den Transportkanal DCH2 hingegen sind nur zwei Transportformate TF0 und TF1 in der Transport Format Set TFS konfiguriert. So legt Transportformat TF1 fest, dass pro Übertragungszeitlänge von TTI=40ms ein Transportblock der Größe 148 Bits über den DCH2 an die physikalische Schicht gesendet wird. Dort wird dem Transportblock zur Fehlererkennung 16 CRC-Prüfsummenbits angehängt. Der Transportblock wird daraufhin durch einen Faltungscoder der Coderate 1/3 kanalcodiert.

Anschließend werden die codierten Daten beider Transportkanäle in Abhängigkeit ihrer jeweiligen TTI gemeinsam auf einen Funkzeitrahmen CCTrCH multiplext. Aufgrund der TTI=20ms von DCH1 werden deren Daten auf zwei aufeinanderfolgenden Funkzeitrahmen, während die Daten von DCH2 aufgrund der TTI=40ms auf vier aufeinanderfolgende Funkzeitrahmen über die Luftschnittstelle zu UTRAN übertragen werden. Die zulässige Kombination von Transportformaten beider Transportkanäle DCH1 und DCH2 auf den CCTrCH ist durch die Transport Format Combination Set TFCS spezifiziert. Allgemein ergibt sich die maximale Anzahl der möglichen Transportformat-Kombinationen TFC aus dem Produkt der für jeden Transportkanal konfigurierten Anzahl von Transportformaten. Es liegt in der Verantwortung und Kontrolle von UTRAN die Größe der TFCS, d.h. die Anzahl und Art der erlaubten Kombinationen von Transportformaten verschiedener Transportkanäle korrekt festzulegen. In der Praxis kann die erlaubte Anzahl von TFCs in einem TFCS kleiner als der theoretisch mögliche Maximalwert sein. In diesem Ausführungsbeispiel ist die erlaubte Größe der TFCS=10 auch die tatsächlich maximale Anzahl, also 5 TFs von DCH1 und 2 TFs von DCH2. In Tabelle 3 sind diese 10 erlaubten Transportformat-Kombinationen aufgeführt. Die Notation der TFC ist mit i=0 ... 4 und j=0,1 bei TF#i von DCH1, TF#j von DCH2 festgelegt.

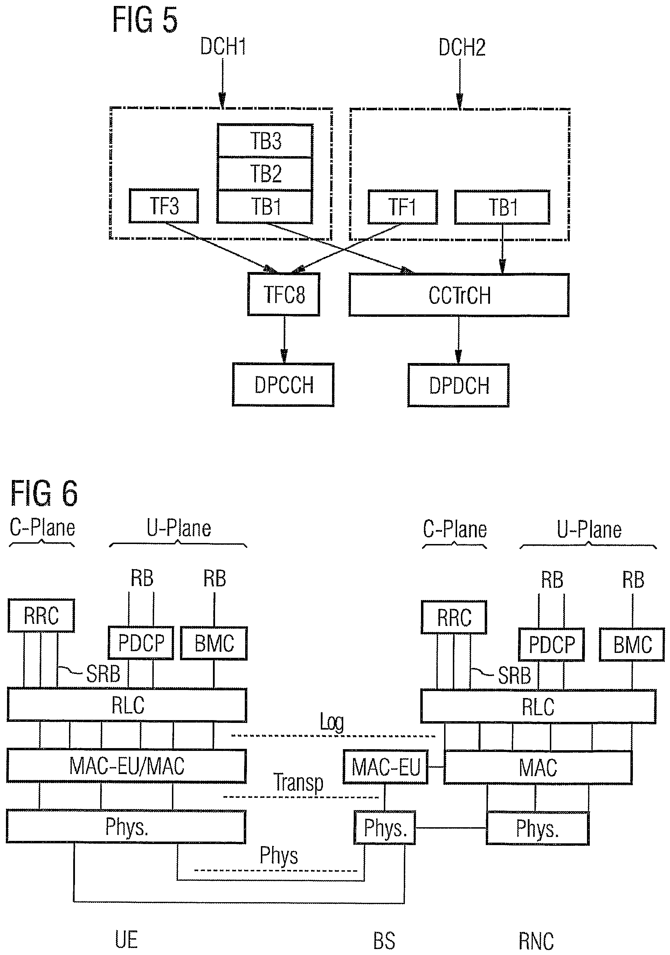

In Figur 5 ist ein Beispiel für das Uplink-Scheduling illustriert, in der die MAC-d Einheit in Abhängigkeit von der momentanen Übertragungssituation die Transportformat- Kombination TFC8 zur Datenübertragung ausgewählt hat. Hierbei gibt die Kombination TFC8=(TF3, TF1) an, dass auf dem CCTrCH die jeweiligen Anteile der codierten Daten von drei Transportblöcken TB1, TB2, TB3 von DCH1 (=TF3) und von einem Transportblock (TB1) von DCH2 (=TF1) übertragen werden. Damit die physikalische Schicht in der Basisstation BS1 die Daten auf dem DPDCH korrekt decodieren kann, wird auf dem DPCCH als Kontrollinformation die auf dem CCTrCH verwendete Transportformat-Kombination TFC8 signalisiert.

Ein wesentlicher Punkt der vorliegenden Erfindung ist die Definition von speziellen Signalisierungs-Transportblöcken STB zur Inband-Signalisierung von Basisstation-relevanten Informationen auf der MAC-Schichtebene. Hiermit wird eine schnelle und effiziente Kontrolle von Funkressourcen ermöglicht. Ohne Einschränkung der Allgemeinheit wird im Weiteren angenommen, dass die Basisstation BS über folgende RRC-Funktionen verfügt:
- Rekonfiguration von physikalischen Kanälen in Uplink und Downlink
- Rekonfiguration der Transportformate und Transportformat-Kombinationen in Uplink und Downlink
- Umschaltung des Transportkanal-Typs, d.h. von gemeinsamen Transportkanäle auf dedizierte Transportkanäle und umgekehrt
- Einstellung des Uplink SIR_{target} zur schnellen Leistungskontrolle von dedizierten physikalischen Kanälen

Im einzelnen sieht eine erfindungsgemäße Lösung wie folgt aus:

### 1. Erweiterte UTRAN-Protokollarchitektur:

Innerhalb der UTRAN-Protokollarchitektur wird in der MAC-Schicht eine neue Einheit mit der Bezeichnung Medium Access Control Enhanced Uplink definiert, abgekürzt als MAC-EU. Eine dementsprechend erweiterte UTRAN-Protokollarchitektur ist in Figur 6 analog der Abbildung von Figur 2 dargestellt. Netzwerkseitig befindet sich die MAC-EU Einheit nur in der Basisstation. Die MAC-EU führt hierbei alle Funktionen durch, die zur Inband-Signalisierung von Basisstation-relevanten Informationen über die Signalisierungs-Transportblöcke zur Funkressourcen-Kontrolle erforderlich sind.

### Diese Funktionen beinhalten u.a.:

- Generierung von einen oder mehreren Signalisierungs-Transportblöcke zur Inband-Signalisierung;
- Auswahl eines Transportkanals zur Übertragung der Signalisierungs-Transportblöcke;
- Multiplexing von Signalisierungs-Transportblöcken innerhalb der zu sendenden Transportblöcke eines Transportkanals;
- Demultiplexing von Signalisierungs-Transportblöcken innerhalb der empfangenen Transportblöcke eines Transportkanals;
- Weiterleitung der in den Signalisierungs-Transportblöcken übertragenen Informationen zur RRC-Einheit in der Basisstation bzw. UE zur weiteren Verarbeitung und
- Kontrolle zur sicheren Übertragung bzw. zum sicheren Empfang von Nachrichten in Signalisierungs-Transportblöcken.

In Abhängigkeit von der RRC-Funktionalität der Basisstation BS werden über einen STB verschiedene Typen von Nachrichten zwischen der Basisstation BS und einem Teilnehmergerät UE ausgetauscht. Beispiele für Inhalte diese neuen Transportblocks sind nach der folgenden nicht abgeschlossenen Aufzahlung:
- Physical Channel Reconfiguration Control: Nachricht von der Basisstation an die UE zur Rekonfiguration der physikalischen Kanäle im Uplink und Downlink.
- TF Reconfiguration Control: Nachricht von der Basisstation an die UE zur Rekonfiguration der Transportformate und Transportformat-Kombinationen im Uplink und Downlink.
- Buffer Status Control: Nachricht von der Basisstation an die UE zur Übertragung des aktuellen Datenvolumens eines bestimmten Transportkanals, d.h. der aktuelle RLC Bufferstand aller RBs bzw. logischen Kanäle, die auf den Transportkanal multiplext sind.
- Buffer Status Report: Antwort von der UE an die Basisstation auf die Buffer Status Control-Nachricht mit Signalisierung des Datenvolumens des Transportkanals.

### 2. Definition der Transportblock-Typen:

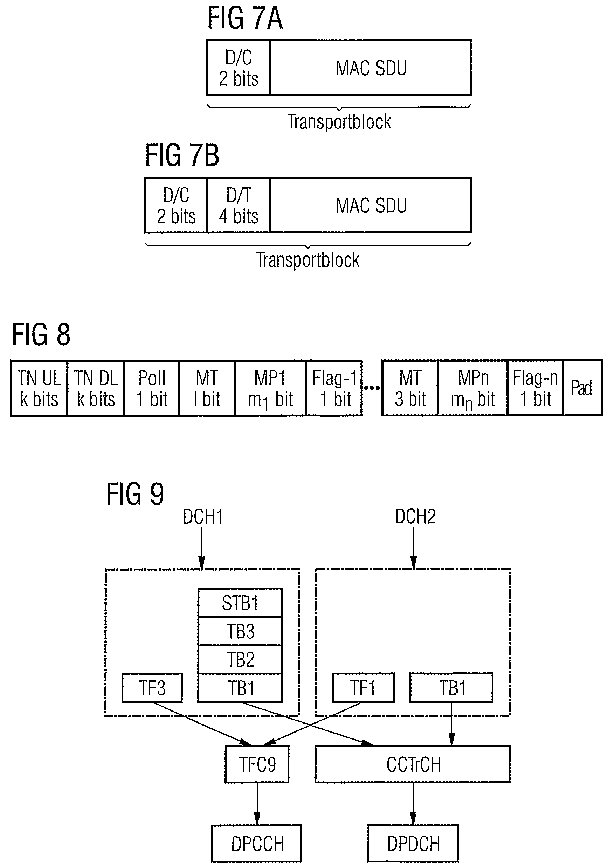

Es werden für die dedizierten logischen Kanäle DTCH und DCCH zwei neue Transportblock-Formate in Abhängigkeit des MAC-Multiplexings definiert, siehe Figur 7. Ohne Einschränkung der Allgemeinheit wird in Figur 7 ein DCH-Transportkanal betrachtet, d.h. prinzipiell sind die neuen Formate auch für die gemeinsamen Transportkanäle, wie RACH im Uplink und FACH im Downlink, anwendbar.
- Fall a): DTCH oder DCCH werden auf einem DCH- Transportkanal abgebildet ohne Multiplexing. In diesem Fall wird als MAC-Header nur ein D/C-Feld der Länge 2 Bits angefügt.
- Fall b): DTCH oder DCCH werden auf einem DCH- Transportkanal abgebildet mit Multiplexing. In diesem Fall besteht der MAC-Header aus dem D/C-Feld der Länge 2 Bits und dem C/T-Feld der Länge 4 Bits, in der die jeweilige Identität des logischen Kanals übertragen wird.

Das Feld trägt die Bezeichnung D/C als Abkürzung für Data/ Control. Mit dem Feld D/C wird der Typ des Transportblocks angezeigt:
- Mit D/C=00 wird ein Signalisierungs-Transportblock STB signalisiert. Dann stellt die MAC SDU die Paketeinheit dar, über die nur Basisstation-relevante Informationen zur Funkressourcen-Kontrolle zwischen Teilnehmergerät und Basisstation ausgetauscht werden.
- Entsprechend wird mit D/C=11 ein normaler Transportblock signalisiert, durch den Nutzdaten oder RRC-Signalisierungsdaten übertragen werden, wie bisher. Dann stellt die MAC SDU die Paketeinheit dar, welche die MAC-Schicht über DTCH bzw. DCCH erhält.

### 3. Struktur des Signalisierungs-Transportblocks

In Figur 8 ist die allgemeine Struktur des MAC SDU-Teils eines Signalisierungs-Transportblocks STB dargestellt, über der bis zu n Nachrichten übertragen werden können:
- TN UL: Dieses Statusfeld bzw. Feld überträgt eine Uplink Transmissionsnummer und dient der Nachverfolgung des Übertragungsstatus im Uplink. Das Feld hat eine Länge von k Bits.
- TN DL: Dieses Feld überträgt eine Downlink Transmissionsnummer und dient der Nachverfolgung des Übertragungsstatus im Downlink. Das Feld hat eine Länge von k Bits.
- Poll: Dieses Feld wird verwendet um eine Bestätigung über die erfolgreiche Übertragung eines Signalisierungs-Transportblocks innerhalb einer festgesetzten Zeit vom Empfänger anzufordern. Das Feld hat eine Länge von 1 Bit.
- MT: In diesem Feld wird der Nachrichtentyp spezifiziert, der im folgenden Nachrichtenteil übertragen wird. Das Feld wird mit l Bits codiert.
- MP: In diesem Feld wird die Nachricht übertragen, die durch den MT-Teil spezifiziert wurde. Das Feld hat in Abhängigkeit vom Typ der zu übertragenden Nachricht eine variable Länge von m Bits.
- Flag: Dieses Feld wird verwendet um anzuzeigen, ob im anschließenden Feld das Feld MT, d.h. eine weitere Nachricht, gesendet wird oder nicht. Das Feld hat eine Länge von 1 Bit.
- Pad: Das Feld dient zur Auffüllung des nicht genutzten Teils im MAC SDU mit Pseudo-Zeichen, sog. Dummy-Bits.

Die Statusfelder TN UL, TN DL und Poll dienen der Kontrolle zur sicheren Übertragung bzw. zum sicheren Empfang von Nachrichten in einem Signalisierungs-Transportblock. Dies wird durch folgenden Mechanismus realisiert:
- Die MAC-EU Einheit im UE verfügt über einen Uplink-Transmissionszähler Z1 mit einem Integerwertebereich von 0 bis N-1, codiert mit k Bits. Für jeden in Uplink-Richtung gesendeten STB wird der aktuelle Wert dieses Uplink-Zählers im Feld TN UL übertragen und dann um eins erhöht. Des weiteren wird im Feld TN DL der Wert des zuletzt empfangenen DL-STBs übertragen. Nach Erreichen des maximalen Zählerstands, wird Z1 auf 0 zurückgesetzt und erneut hochgezählt.
- Äquivalent dazu verfügt die MAC-EU Einheit in der Basisstation über einen Downlink-Transmissionszähler Z2 mit einem Integerwertebereich von 0 bis N-1, codiert mit k Bits. Für jeden in Downlink-Richtung gesendeten STB wird der aktuelle Wert dieses Downlink-Zählers im Feld TN DL übertragen und dann um eins erhöht. Des weiteren wird im Feld TN UL der Wert des zuletzt empfangenen UL-STBs übertragen. Nach Erreichen des maximalen Zählerstands, wird Z2 auf 0 zurückgesetzt und erneut hochgezählt.
- Die jeweiligen MAC-EU Einheiten können bei Bedarf mit Hilfe des Statusfelds Poll die Bestätigung für den erfolgreichen Empfang eines STBs innerhalb einer festgesetzten Zeit von den jeweiligen Empfängereinheiten anfordern, d.h. durch einen gesetzten Poll-Bit =1.

Bei fehlerfreien Übertragungsbedingungen erhalten die jeweiligen MAC-EU Einheiten im Empfänger eine sequentielle Nummernfolge von Signalisierungs-Transportblöcken, d.h. evtl. Übertragungsfehler werden durch Unterbrechungen in der Sequenznummernfolge erkannt.

Zusammenfassend werden erfindungsgemäß innerhalb der MAC-Protokollschicht spezielle Signalisierungs-Transportblöcke definiert, über der zukünftig eine schnelle und effiziente Inband-Signalisierung zur Funkressourcen-Kontrolle zwischen einer Basisstation und einem Teilnehmergerät realisiert werden kann. Damit ergeben sich folgende Vorteile: Die Erfindung unterstützt eine erweiterte UTRAN-Protokollarchitektur mit RRC-Funktionalität in der Basisstation, so dass das Management der Funkressourcen zukünftig näher an der Luftschnittstelle erfolgen kann. Auf diese Weise können für ein Teilnehmergerät Rekonfigurationen von Funkressourcen in Uplink und Downlink in Abhängigkeit der Verkehrs last in einer Funkzelle viel schneller und effizienter durchgeführt werden. Die Datenübertragung in Downlink und insbesondere in Uplink kann im Hinblick auf die Übertragungsverzögerung und den Datendurchsatz wesentlich verbessert werden.

In den folgenden Ausführungsbeispielen wird die in Figur 6 dargestellte erweiterte UTRAN-Protokollarchitektur mit der neuen MAC-EU Einheit in der MAC-Schicht betrachtet. Ohne Einschränkung der Allgemeinheit wird angenommen, dass die Basisstation über folgende RRC-Funktionen verfügt, wie vorstehend bereits angegeben:
- Rekonfiguration von physikalischen Kanälen in Uplink und Downlink
- Rekonfiguration der Transportformate und Transportformat-Kombinationen in Uplink und Downlink
- Umschaltung des Transportkanal-Typs, d.h. von gemeinsamen Transportkanäle auf dedizierte Transportkanäle und umgekehrt
- Einstellung des Uplink SIR_{target} zur schnellen Leistungskontrolle von dedizierten physikalischen Kanälen

Es wird eine Datenübertragung zwischen einem UE und UTRAN über eine dedizierte Verbindung mit den folgenden Konfigurationen betrachtet:
- Für Uplink und Downlink wird ein Übertragungsszenario nach Figur 4 betrachtet.
- Im U-plane werden die Nutzerdaten auf zwei RBs übertragen, d.h. RB#1 und RB#2. Die Konfiguration der beiden RBs ist in Tabelle 4 zusammengefasst.
- Im C-plane sind 4 SRBs (SRB#1 bis SRB#4) konfiguriert. Deren Parameter sind in Tabelle 1 zusammengefasst.
- In Tabelle 5 sind die erlaubten Transportformat-Kombinationen aufgelistet, wobei nun insgesamt 12 Kombinationen definiert sind.
- Es wird ein Transportblock-Format gemäß Fall b) in Figur 7 betrachtet, d.h. der MAC-Header besteht aus den Feldern D/C und C/T.
- Hinsichtlich des Formats eines Signalisierungs-Transportblocks nach Figur 8 wird folgende Konfiguration betrachtet: Länge der Felder TN UL, TN DL und MT jeweils 3 Bits.

### Ausführungsbeispiel 1: Inband-Signalisierung in Downlink

Der Transmissionszähler Z2 für Downlink ist im Initial-Zustand mit dem Wert 0 und MAC-EU in der Basisstation hat noch keinen UL-STB von der UE empfangen. Aufgrund der aktuellen Verkehrssituation in der Funkzelle will die Basisstation innerhalb der bestehenden dedizierten Datenübertragung zwischen UE und UTRAN zwei Nachrichten zur Funkressourcen-Kontrolle an die UE über einen DL-STB senden:
- Physical Channel Reconfiguration Control zur Rekonfiguration der dedizierten physikalischen Kanäle im Uplink und Downlink, beispielsweise neue Parameter für SF, Channelization Code und Scrambling Code.
- Buffer Status Control zur Übertragung des aktuellen Datenvolumens des dedizierten UL-Transportkanals DCH1.

Auf Basis des Downlink-Scheduling hat die MAC-d Einheit im RNC die TFC9 zur Datenübertragung auf dem CCTrCH ausgewählt, d.h. es sollen in der physikalischen Schicht pro 10ms die jeweiligen Anteile der codierten Daten von vier Transportblöcken (TB1, TB2, TB3, TB4) von DCH1 (=TF3) und von einem Transportblock (TB1) von DCH2 (=TF1) übertragen werden.

Aufgrund der verfügbaren Übertragungskapazität auf DCH1 wählt sich die MAC-EU in der Basisstation BS diesen Transportkanal zur Übertragung seines Signalisierungs-Transportblocks der Größe 182 Bits aus. MAC-EU signalisiert der MAC-d Einheit den Bedarf, so dass über den DCH1 tatsächlich nur drei normale Transportblöcke übertragen werden. Die MAC-EU generiert nun einen STB mit der folgenden Konfiguration:
- D/C = 00
- C/T= Dummy-Bits, da dieses Feld im Fall eines STBs keine Bedeutung hat
- TN UL = 0
- TN DL = 0
- Poll = 0
- MT = Physical Channel Reconfiguration Control
- MP1 = Inhalt der Physical Channel Reconfiguration Control-Nachricht
- Flag-1 = 1, um anzuzeigen, dass eine weitere Nachricht folgt
- MT = Buffer Status Control
- MP2 = Inhalt der Buffer Status Control-Nachricht
- Flag-2 = 0, um anzuzeigen, dass keine weitere Nachricht folgt
- Pad = Dummy-Bits, falls erforderlich

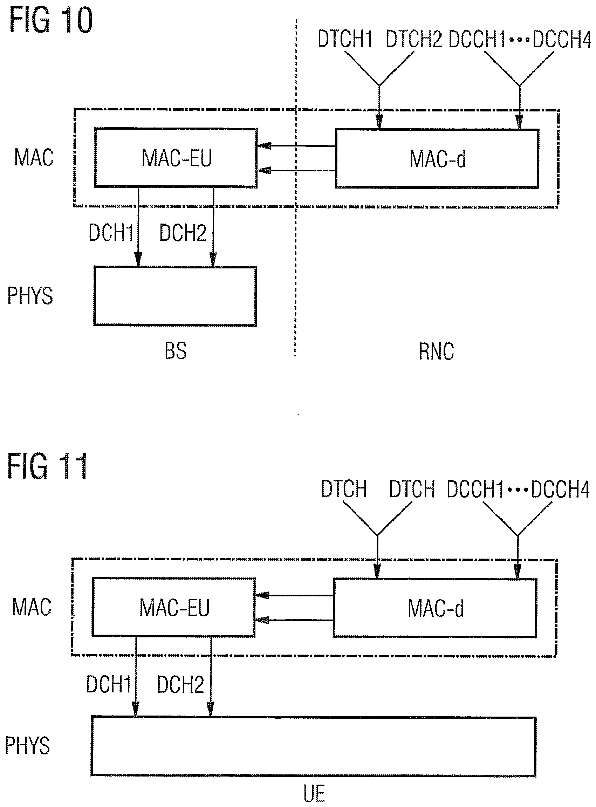

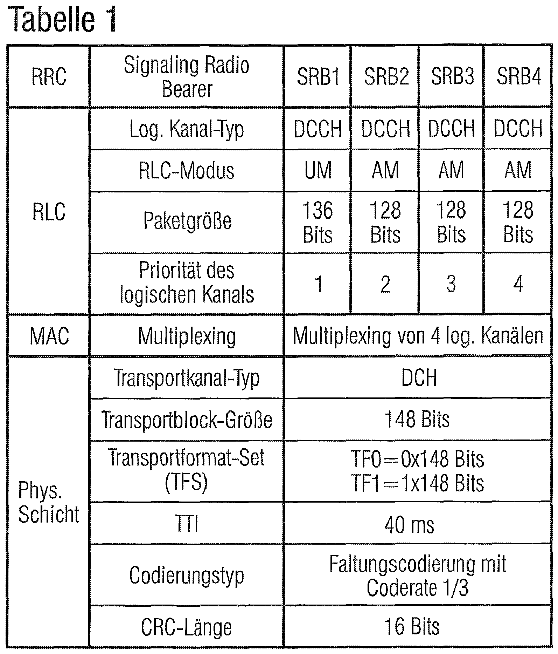

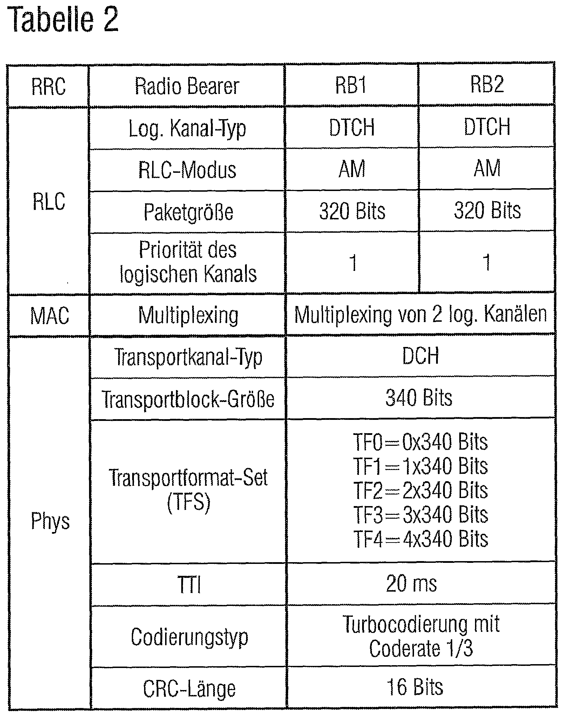

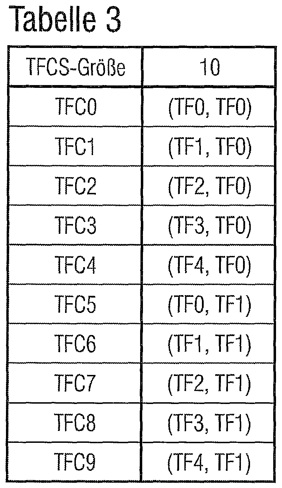

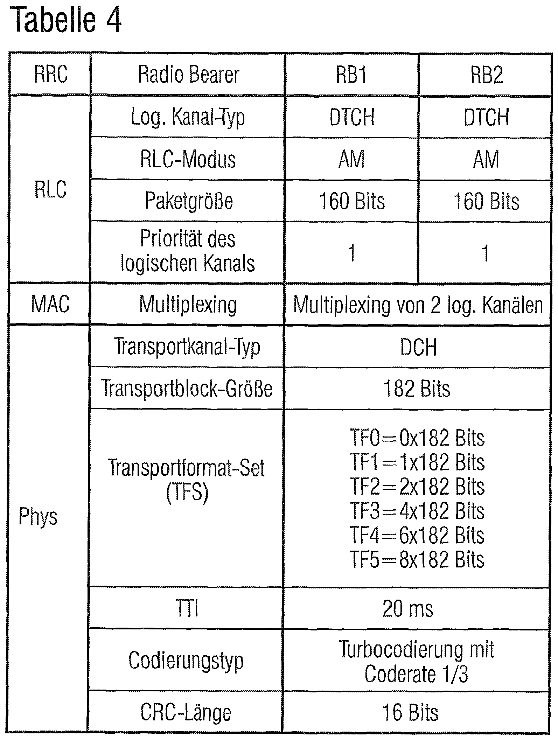

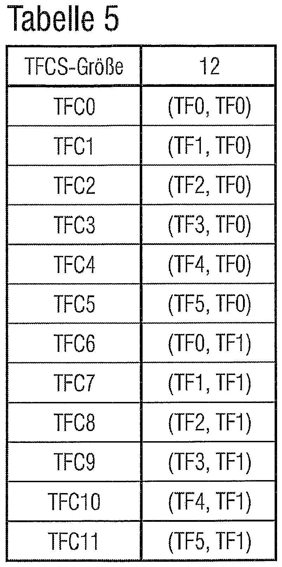

Anschließend wird dieser STB vom MAC-EU innerhalb der zu sendenden normalen Transportblöcke von DCH1 multiplext, wie in Figur 9 dargestellt, und zur weiteren Verarbeitung an die physikalische Schicht weitergeleitet. Der prinzipielle Signalverlauf ist in Figur 10 dargestellt, wobei die Strich-Punkt-Linie die physikalische Trennung der MAC-Schicht als einer logischen Einheit verdeutlicht. Damit die physikalische Schicht in der UE die Daten auf dem DPDCH korrekt decodieren kann, wird auf dem DPCCH als Kontrollinformation die auf dem CCTrCH verwendete Transportformat-Kombination TFC9 signalisiert.

In der MAC-EU Einheit im UE werden die empfangenen Transportblöcke auf dem DCH1 anhand dem D/C-Feld im MAC-Header ausgewertet, und im Fall D/C = 00 wird der DL-STB1 entsprechend demultiplext. Die drei anderen Transportblöcke TB1, TB2 und TB3 werden zur weiteren Verarbeitung an die MAC-d Einheit weitergereicht.

### Ausführungsbeispiel 2: Inband-Signalisierung in Uplink

Der Transmissionszähler Z1 für Uplink ist im Initial-Zustand mit dem Wert 0 und die MAC-EU im UE hat den DL-STB von der Basisstation empfangen. Auf Basis der empfangenen Nachrichten werden zum einen die physikalischen Kanäle im Uplink und Downlink neu konfiguriert. Zum anderen wird die Messung des Datenvolumens auf den UL-DCH1 durchgeführt. Als Antwort hierauf soll nun die Nachricht Buffer Status Report zur Basisstation über einen UL-STB gesendet werden.

Auf Basis des Uplink-Scheduling hat die MAC-d Einheit im UE die TFC9 zur Datenübertragung auf dem CCTrCH ausgewählt, d.h. es sollen in der physikalischen Schicht pro 10ms die jeweiligen Anteile der codierten Daten von vier Transportblöcken (TB1, TB2, TB3, TB4) von DCH1 (=TF3) und von einem Transportblock (TB1) von DCH2 (=TF1) übertragen werden.

Aufgrund der verfügbaren Übertragungskapazität auf DCH1 wählt sich die MAC-EU diesen Transportkanal zur Übertragung seines Signalisierungs-Transportblocks der Größe 182 Bits aus. MAC-EU signalisiert der MAC-d Einheit den Bedarf, so dass über den DCH1 tatsächlich nur drei normale Transportblöcke übertragen werden. Die MAC-EU generiert nun einen STB mit der folgenden Konfiguration:
- D/C = 00
- C/T = Dummy-Bits, da dieses Feld im Fall eines STBs keine Bedeutung hat
- TN UL = 0
- TN DL = 0
- Poll = 0
- MT = Buffer Status Report
- MP1 = Inhalt der Buffer Status Report-Nachricht
- Flag-1 = 0, um anzuzeigen, dass keine weitere Nachricht folgt
- Pad = Dummy-Bits, falls erforderlich

Anschließend wird dieser STB vom MAC-EU innerhalb der zu sendenden normalen Transportblöcke von DCH1 multiplext, wie in Figur 9 dargestellt, und zur weiteren Verarbeitung an die physikalische Schicht weitergeleitet. Der prinzipielle Signalverlauf in Uplink-Richtung ist in Figur 11 dargestellt, wobei hier, im Gegensatz zu der Situation von Figur 10, keine physikalische Trennung der MAC-Schicht vorliegt.. Damit die physikalische Schicht in der Basisstation die Daten auf dem DPDCH korrekt decodieren kann, wird auf dem DPCCH als Kontrollinformation die auf dem CCTrCH verwendete Transportformat-Kombination TFC9 signalisiert.

In der MAC-EU Einheit in der Basisstation BS werden die empfangenen Transportblöcke auf dem DCH1 anhand dem D/C-Feld im MAC-Header ausgewertet, und im Fall D/C = 00 wird der UL-STB1 entsprechend demultiplext. Die drei anderen Transportblöcke TB1, TB2 und TB3 werden zur weiteren Verarbeitung an die MAC-d Einheit im RNC weitergereicht.

Im Rahmen der Beschreibung der vorliegenden Erfindung wird insbesondere auf folgende Literatur Bezug genommen:
[1] 3GPP TS 25.301: Radio Interface Protocol Architecture
[2] 3GPP TS 25.331: Radio Resource Control (RRC) protocol specification
[3] 3GPP TS 25.321: Medium Access Control (MAC) protocol specification

Ferner werden folgende Abkürzungen verwendet:
- 3GPP: Third Generation Partnership Project
- AM: Acknowledged Mode
- BCCH: Broadcast Control Channel
- BCH: Broadcast Channel
- BMC: Broadcast Multicast Control
- BO: Buffer Occupancy
- BS: Basisstation
- CCTrCH: Coded Composite Transport Channel
- CDMA: Code Division Multiple Access
- CE: Funkzelle
- CRC: Cyclic Redundancy Check
- D/C: Data/Control
- DCCH: Dedicated Control Channel
- DCH: Dedicated Channel
- DL: Downlink
- DPCCH: Dedicated Physical Control Channel
- DPDCH: Dedicated Physical Data Channel
- DTCH: Dedicated Traffic Channel
- FACH: Forward Access Channel
- FCS: Funkkommunikationssystem
- FDD: Frequency Division Duplex
- IP: Internet Protocol
- kbps: kilo bits per second
- Log: Logical channel
- MAC: Medium Access Control
- MAC-b: MAC broadcast
- MAC-c/sh: MAC control/shared
- MAC-d: MAC dedicated
- MAC-EU: MAC Enhanced Uplink
- MP: Message Part
- MT: Message Type
- PDCP: Packet Data Convergence Protocol
- PS: Packet-Switched
- Phy: Physical channel
- Phys: Physical layer
- QoS: Quality of Service
- RACH: Random Access Channel
- RB: Radio Bearer
- RLC: Radio Link Control
- RNC: Radio Network Controller, FunknetzwerkKontrolleinheit
- RRC: Radio Resource Control
- SDU: Service Data Unit
- SF: Spreading Factor
- SIR: Signal to Interference Ratio
- SRB: Signaling Radio Bearer
- STB: Signalisierungs-Transportblock
- TB: Transportblock
- TF: Transportformat
- TFC: Transportformat-Kombination
- TFCS: Transport Format Combination Set
- TFS: Transport Format Set
- TM: Transparent Mode
- TN: Transmissionsnummer
- Transp: Transport channel
- TTI: Transmission Time Interval
- UE: User Equipment, Teilnehmergerät
- UL: Uplink
- UM: Unacknowledged Mode
- UMTS: Universal Mobile Telecommunications System
- UTRAN: UMTS Terrestrial Radio Access Network

## Patentansprüche

1. Verfahren zur Übertragung von Daten von einem Versender an einen Empfänger, wobei das Verfahren nach dem Universal Mobile Telecommunications System-Standard, UMTS, arbeitet, **dadurch gekennzeichnet,**
**dass** eine Inband-Signalisierung von Informationen auf der MAC-Schichtebene vorgenommen wird, die für die UMTS-Basisstation, BS, relevant sind, dass für eine schnelle und effiziente Signalisierung zwischen einem Teilnehmer-Endgerät, UE, und einer jeweiligen UMTS-Basisstation, BS, auf der MAC-Schichtebene ein Signalisierungstransportblock, STB, eingeführt wird, dass ein oder mehrere Signalisierungstransportblöcke, STB, innerhalb der zu sendenden Transportblöcke eines Transportkanals gemultiplext werden, und das ein oder mehrere Signalisierungstransportblöcke, STB, Buffer-Status-Report-Information aufweisen, welche auf mindestens einer Funkressourcen-Kontrollnachricht basiert, die von der UMTS-Basisstation, BS, gesendet wird, wobei die Buffer-Status-Report-Information das Datenvolumen des Transportkanals von dem Teilnehmer-Endgeräte zu der UMTS-Basisstation anzeigt.

2. Verfahren nach dem vorhergehenden Anspruch, **dadurch gekennzeichnet, dass** ein dedizierter oder gemeinsamer Transportkanal genutzt wird.

3. Verfahren nach dem vorhergehenden Anspruch, wobei der dedizierte Transportkanal ein DCH ist.

4. Verfahren nach einem oder mehreren der vorhergehenden Ansprüche, **dadurch gekennzeichnet, dass** ein Signalisierungstransportblock, STB, im Feld (TN UL) eine Uplink Transmissionsnummer überträgt, die der Nachverfolgung des Übertragungsstatus im Uplink dient, wobei das Feld eine Länge von k Bits hat.

5. Verfahren nach einem oder mehreren der vorhergehenden Ansprüche, **dadurch gekennzeichnet, dass** ein Signalisierungstransportblock, STB, in einem Feld (TN DL) eine Downlink Transmissionsnummer überträgt, die der Nachverfolgung des Übertragungsstatus im Downlink dient, wobei das Feld eine Länge von k Bits hat.

6. Verfahren nach einem oder mehreren der vorhergehenden Ansprüche, **dadurch gekennzeichnet, dass** ein Signalisierungstransportblock, STB, ein Feld (Poll) überträgt, um eine Bestätigung über die erfolgreiche Übertragung eines Signalisierungstransportblocks innerhalb einer festgesetzten Zeit vom Empfängeranzufordern, wobei das Feld eine Länge von k Bits hat.

7. Verfahren nach einem oder mehreren der vorhergehenden Ansprüche, **dadurch gekennzeichnet, dass** ein Signalisierungstransportblock, STB, ein Feld (MT) überträgt, in dem ein Nachrichtentyp spezifiziert wird, der im folgenden Nachrichtenteil übertragen wird, wobei das Feld mit l Bits codiert wird.

8. Verfahren nach einem oder mehreren der vorhergehenden Ansprüche, **dadurch gekennzeichnet, dass** ein Signalisierungstransportblock, STB, ein Feld (MP) überträgt, in dem die Nachricht übertragen wird, die durch das zugehörige Feld (MT) spezifiziert wird, und das Feld in Abhängigkeit vom Typ der zu übertragenden Nachricht eine variable Länge von m Bits hat.

9. Verfahren nach einem oder mehreren der vorhergehenden Ansprüche, **dadurch gekennzeichnet, dass** ein Signalisierungstransportblock, STB, ein Feld (Flag) überträgt, der anzeigt, ab im anschließenden Feld ein Feld (MT) gesendet wird, und las Feld mit 1 Bit codiert wird.

10. Verfahren nach einem oder mehreren der vorhergehenden Ansprüche, **dadurch gekennzeichnet, dass** einSignalisierungstransportblock, STB, ein Feld (Pad) überträgt, das zur Auffüllung des nicht genutzten Teils in der MAC Service Data Unit, MAC SDU, mit Dummy-Bits dient.

11. Verfahren nach einem oder mehreren der vorhergehenden Ansprüche, **dadurch gekennzeichnet, dass** in dem Signalisierungstransportblock, STB, verschiedene Nachrichten zur Funkressourcen-Kontrolle zwischen der Basisstation, BS, und einem Teilnehmergerät, UE, ausgetauscht werden.

12. Verfahren nach einem oder mehreren der vorhergehenden Ansprüche, **dadurch gekennzeichnet, dass** im MAC-Header ein Datenfeld (D/C) eingeführt wird, durch das ein Typ eines jeweiligen Transportblocks angezeigt wird.

13. Verfahren nach einem oder mehreren der vorhergehenden Ansprüche, **dadurch gekennzeichnet, dass** das Datenfeld (D/C) mit einer Länge von 2 Bits codiert angefügt wird.

14. Verfahren nach einem oder mehreren der vorhergehenden Ansprüche, **dadurch gekennzeichnet, dass** der Signalisierungstransportblock unter Verwendung von CDMA über die Luftschnittstelle gesendet wird.

15. Verfahren nach einem oder mehreren der vorhergehenden Ansprüche, **dadurch gekennzeichnet, dass** der Signalisierungstransportblock im FDD-Modus übermittelt wird.

16. Verfahren nach einem oder mehreren der vorhergehenden Ansprüche, **dadurch gekennzeichnet, dass** der Signalisierungstransportblock an die physikalische Schicht gesendet wird.

17. Verfahren nach einem oder mehreren der vorhergehenden Ansprüche, **dadurch gekennzeichnet, dass** die Inband-Signalisierung für eine oder mehrere der folgenden RRC-Funktionen der Basisstation durchgeführt wird:
- Rekonfiguration von physikalischen Kanälen in Uplink und Downlink
- Rekonfiguration der Transportformate und Transportformat-kombinationen in Uplink und Downlink
- Umschaltung des Transportkanal-Typs, d.h. von gemeinsamen Transportkanälen auf dedizierte Transportkanäle und umgekehrt
- Einstellung des Uplink SIR_{target} zur schnellen Leistungskontrolle von dedizierten physikalischen Kanälen.

18. Verfahren nach einem oder mehreren der vorhergehenden Ansprüche, **dadurch gekennzeichnet, dass** ein Transportkanal zur Übertragung des Signalisierungs-Transportblocks ausgewählt wird.

19. Verfahren nach einem oder mehreren der vorhergehenden Ansprüche, **dadurch gekennzeichnet, dass** die Informationen Informationen aus der folgendedn Liste enthalten:
- Informationen an ein Teilnehmergerät zur Rekonfiguration der physikalischen Kanäle im Uplink und Downlink
- Informationen an ein Teilnehmergerät zur Rekonfiguration der Transportformate und Transportformat-kombinationen in Uplink und Downlink
- Informationen an ein Teilnehmergerät über den Bufferstand der Radio Bearer und logischen Kanäle, die auf einen Transportkanal multiplext sind
- Informationen an eine Basisstation über das Datenvolumen eines Transportkanals.

20. Verfahren nach einem oder mehreren der vorhergehenden Ansprüche, **dadurch gekennzeichnet, dass** ein Transmissionszähler nach dem Senden des Signalisierungstransportblocks um eins erhöht wird.

21. Kommunikationssystem mit mindestens einer Basisstation, BS, die von einer übergeordneten Funknetzwerk-Kontrolleinheit, RNC, kontrolliert wird und eine Funkzelle, CE, aufspannt, in der zwischen der Basisstation, BS, und mindestens einem Teilnehmerendgerät, UE, eine Kommunikationsverbindung über eine Luftschnittstelle, Uu, mit einer UMTSProtokollstruktur besteht,
**dadurch gekennzeichnet,**
**dass** RRC-Funktionalitäten in Form mindestens eines Kontroll- und/oder Datenverarbeitungsmittels aus dem Funknetzwerk-Kontrolleinheit, RNC, hin in die Basisstation, BS, verlagert angeordnet sind.

22. Kommunikationssystem nach Anspruch 22, **dadurch gekennzeichnet, dass** in der Basisstation und dem Teilnehmer-Endgerät entsprechende Signalisierungsmittel vorgesehen sind, um eine geeignete Signalisierung zu schaffen.

23. Kommunikationssystem nach Anspruch 22 oder 23, **dadurch gekennzeichnet, dass** spezielle Signalisierungs-Transportblöcke, STB, und zwei verschiedene Transportblock-Formate vorgesehen sind.

24. Computerprogrammprodukt, dadurch gekennzzeichnet, dass es nach dem Laden den einen Speicher einer Datenverarbeitungsanlage diese im Zusammenspiel mit einem Komunkationssystem, das einem UMTS-Standard entsprechend ausgebildet ist, in die Lage versetzt, ein Verfahren nach einem oder mehreren der Ansprüche 1 bis 20 auszuführen.

## Claims

1. Method for transmitting data from a sender to a receiver, wherein the method operates according to the Universal Mobile Telecommunications System standard, UMTS,
**characterized**
**in that** in-band signalling of information relevant to the UMTS base station BS is carried out on the MAC layer plane,
**in that** a signalling transport block STB is introduced on the MAC layer plane for fast and efficient signalling between a subscriber terminal UE and a respective UMTS base station BS, in that one or more signalling transport blocks STB are multiplexed within the transport blocks to be transmitted in a transport channel, and in that one or more signalling transport blocks STB have buffer status report information based on at least one radio resource control message transmitted by the UMTS base station BS, wherein the buffer status report information indicates the data volume of the transport channel from the subscriber terminal to the UMTS base station.

2. Method according to the preceding claim, **characterized in that** a dedicated transport channel or a common transport channel is used.

3. Method according to the preceding claim, wherein the dedicated transport channel is a DCH.

4. Method according to one or more of the preceding claims, **characterized in that** a signalling transport block STB transmits, in the field (TN UL), an uplink transmission number which is used to track the transmission status in the uplink, wherein the field has a length of k bits.

5. Method according to one or more of the preceding claims, **characterized in that** a signalling transport block STB transmits, in a field (TN DL), a downlink transmission number which is used to track the transmission status in the downlink, wherein the field has a length of k bits.

6. Method according to one or more of the preceding claims, **characterized in that** a signalling transport block STB transmits a field (poll) in order to request a confirmation of the successful transmission of a signalling transport block within a fixed time from the receiver, wherein the field has a length of k bits.

7. Method according to one or more of the preceding claims, **characterized in that** a signalling transport block STB transmits a field (MT) which specifies a message type which is transmitted in the subsequent message part, wherein the field is coded with 1 bit.

8. Method according to one or more of the preceding claims, **characterized in that** a signalling transport block STB transmits a field (MP) in which the message specified by the associated field (MT) is transmitted, and the field has a variable length of m bits depending on the type of message to be transmitted.

9. Method according to one or more of the preceding claims, **characterized in that** a signalling transport block STB transmits a field (flag) which indicates whether a field (MT) is transmitted in the subsequent field, and the field is coded with 1 bit.

10. Method according to one or more of the preceding claims, **characterized in that** a signalling transport block STB transmits a field (pad) which is used to fill the unused part in the MAC service data unit MAC SDU with dummy bits.

11. Method according to one or more of the preceding claims, **characterized in that** various messages for controlling radio resources are interchanged between the base station BS and a subscriber device UE in the signalling transport block STB.

12. Method according to one or more of the preceding claims, **characterized in that** a data field (D/C) which indicates a type of a respective transport block is introduced in the MAC header.

13. Method according to one or more of the preceding claims, **characterized in that** the data field (D/C) having a length of 2 bits is attached in a coded manner.

14. Method according to one or more of the preceding claims, **characterized in that** the signalling transport block is transmitted via the air interface using CDMA.

15. Method according to one or more of the preceding claims, **characterized in that** the signalling transport block is transmitted in the FDD mode.

16. Method according to one or more of the preceding claims, **characterized in that** the signalling transport block is transmitted to the physical layer.

17. Method according to one or more of the preceding claims, **characterized in that** the in-band signalling is carried out for one or more of the following RRC functions of the base station:
- reconfiguration of physical channels in the uplink and downlink
- reconfiguration of the transport formats and transport format combinations in the uplink and downlink
- switching of the transport channel type, that is to say from common transport channels to dedicated transport channels and vice versa
- setting of the uplink SIR_{target} for fast power control of dedicated physical channels.

18. Method according to one or more of the preceding claims, **characterized in that** a transport channel is selected for the purpose of transmitting the signalling transport block.

19. Method according to one or more of the preceding claims, **characterized in that** the information contains information from the following list:
- information for a subscriber device for reconfiguring the physical channels in the uplink and downlink
- information for a subscriber device for reconfiguring the transport formats and transport format combinations in the uplink and downlink
- information for a subscriber device relating to the buffer state of the radio bearer and logical channels which are multiplexed onto a transport channel
- information for a base station relating to the data volume of a transport channel.

20. Method according to one or more of the preceding claims, **characterized in that** a transmission counter is incremented by one after the signalling transport block has been transmitted.

21. Communication system having at least one base station BS which is controlled by a superordinate radio network control unit RNC and spans a radio cell CE, in which a communication connection exists, via an air interface Uu with a UMTS protocol structure, between the base station BS and at least one subscriber terminal UE,
**characterized**
**in that** RRC functionalities in the form of at least one control and/or data processing means are arranged such that they are moved from the radio network control unit RNC to the base station BS.

22. Communication system according to Claim 22, **characterized in that** corresponding signalling means are provided in the base station and the subscriber terminal in order to provide suitable signalling.

23. Communication system according to Claim 22 or 23, **characterized in that** special signalling transport blocks STB and two different transport block formats are provided.

24. Computer program product, **characterized in that**, after loading, it makes it possible for the one memory of a data processing system, which interacts with a communication system designed according to a UMTS standard, to carry out a method according to one or more of Claims 1 to 20.

## Revendications

1. Procédé de transmission de données d'un émetteur à un récepteur, dans lequel le procédé fonctionne conformément à la norme UMTS (Universal Mobile Telecommunications System),
**caractérisé en ce que** la signalisation intra-bande d'informations pertinentes pour la station de base UMTS, BS, est effectuée au niveau de la couche MAC,
**en ce qu'**un bloc de transport de signalisation, STB, est introduit au niveau de la couche MAC pour une signalisation rapide et efficace entre un équipement d'utilisateur, UE, et une station de base UMTS, BS, respective
**en ce qu'**un ou plusieurs blocs de transport de signalisation, STB, sont multiplexés à l'intérieur des blocs de transport à transmettre d'un canal de transport, et **en ce qu'**un ou plusieurs blocs de transport de signalisation, STB, comportent des informations de rapport d'état de tampon basées sur au moins un message de commande de ressources radio émis par la station de base UMTS, BS, dans lequel les informations de rapport d'état de tampon indiquent le volume de données du canal de transport de l'équipement d'utilisateur vers la station de base UMTS.

2. Procédé selon la revendication précédente, **caractérisé en ce qu'**un canal de transport dédié ou commun est utilisé.

3. Procédé selon la revendication précédente, dans lequel le canal de transport dédié est un DCH.

4. Procédé selon une ou plusieurs des revendications précédentes, **caractérisé en ce qu'**un bloc de transport de signalisation, STB, transmet dans le champ (TN UL) un numéro de transmission de liaison montante qui sert à suivre l'état de transmission en liaison montante, dans lequel le champ a une longueur de k bits.

5. Procédé selon une ou plusieurs des revendications précédentes, **caractérisé en ce qu'**un bloc de transport de signalisation, STB, transmet dans un champ (TN DL) un numéro de transmission de liaison descendante servant à suivre l'état de transmission en liaison descendante, dans lequel le champ a une longueur de k bits.

6. Procédé selon une ou plusieurs des revendications précédentes, **caractérisé en ce qu'**un bloc de transport de signalisation, STB, transmet un champ (Poll) pour demander confirmation au récepteur de la transmission réussie d'un bloc de transport de signalisation en un temps donné, dans lequel le champ a une longueur de k bits.

7. Procédé selon une ou plusieurs des revendications précédentes, **caractérisé en ce qu'**un bloc de transport de signalisation, STB, transmet un champ (MT) dans lequel est spécifié un type de message qui est transmis dans la partie message suivante, dans lequel ledit champ est codé sur 1 bit.

8. Procédé selon une ou plusieurs des revendications précédentes, **caractérisé en ce qu'**un bloc de transport de signalisation, STB, transmet un champ (MP) dans lequel est transmis le message spécifié par le champ (MT) associé et **en ce que** le champ a une longueur variable de m bits en fonction du type du message à transmettre.

9. Procédé selon une ou plusieurs des revendications précédentes, **caractérisé en ce qu'**un bloc de transport de signalisation, STB, transmet un champ (Flag) indiquant qu'un champ (MT) est envoyé à partir du champ suivant et **en ce que** le champ est codé sur 1 bit.

10. Procédé selon une ou plusieurs des revendications précédentes, **caractérisé en ce qu'**un bloc de transport de signalisation, STB, transmet un champ (Pad) utilisé pour remplir de bits fictifs la partie inutilisée dans l'unité de données de service MAC, MAC SDU.

11. Procédé selon une ou plusieurs des revendications précédentes, **caractérisé en ce que** différents messages destinés à la commande de ressources radio sont échangés dans le bloc de transport de signalisation, STB, entre la station de base, BS, et un équipement d'utilisateur, UE.

12. Procédé selon une ou plusieurs des revendications précédentes, **caractérisé en ce qu'**un champ de données (D/C) au moyen duquel est indiqué un type de bloc de transport respectif est introduit dans l'en-tête MAC.

13. Procédé selon une ou plusieurs des revendications précédentes, **caractérisé en ce que** le champ de données (D/C) est ajouté sous forme codée sur une longueur de 2 bits.

14. Procédé selon une ou plusieurs des revendications précédentes, **caractérisé en ce que** le bloc de transport de signalisation est émis par l'intermédiaire de l'interface radioélectrique en utilisant le CDMA.

15. Procédé selon une ou plusieurs des revendications précédentes, **caractérisé en ce que** le bloc de transport de signalisation est transmis en mode FDD.

16. Procédé selon une ou plusieurs des revendications précédentes, **caractérisé en ce que** le bloc de transport de signalisation est transmis à la couche physique.

17. Procédé selon une ou plusieurs des revendications précédentes, **caractérisé en ce que** la signalisation intra-bande est effectuée pour une ou plusieurs des fonctions RRC suivantes de la station de base :
- reconfiguration des canaux physiques en liaison montante et descendante,
- reconfiguration des formats de transport et des combinaisons de formats de transport en liaison montante et descendante,
- basculement du type de canal de transport, c'est-à-dire de canaux de transport communs vers des canaux de transport dédiés et vice versa,
- réglage du SIR_{cible} de la liaison montante pour un commande de puissance rapide de canaux physiques dédiés.

18. Procédé selon une ou plusieurs des revendications précédentes, **caractérisé en ce qu'**un canal de transport est sélectionné pour transmettre le bloc de transport de signalisation.

19. Procédé selon une ou plusieurs des revendications précédentes, **caractérisé en ce que** les informations contiennent des informations provenant de la liste suivante :
- des informations destinées à un équipement d'utilisateur pour la reconfiguration des canaux physiques en liaison montante et descendante
- des informations destinées à un équipement d'utilisateur pour la reconfiguration des formats de transport et des combinaisons de formats de transport en liaison montante et descendante,
- des informations destinées à un équipement d'utilisateur concernant le niveau de tampon du support radio et des canaux logiques multiplexés sur un canal de transport,
- des informations destinées à une station de base concernant le volume de données d'un canal de transport.

20. Procédé selon une ou plusieurs des revendications précédentes, **caractérisé en ce qu'**un compteur de transmission est incrémenté de 1 après la transmission du bloc de transport de signalisation.

21. Système de communication comprenant au moins une station de base, BS, qui est commandée par une unité de commande de réseau radio, RNC, de niveau supérieur, et qui dessert une cellule radio, CE, dans laquelle se trouve une liaison de communication entre la station de base, BS, et au moins un équipement d'utilisateur, UE, par l'intermédiaire d'une interface radio, Uu, ayant une structure de protocole UMTS, **caractérisé en ce que** des fonctionnalités RRC sous la forme d'au moins un moyen de commande et/ou de traitement de données sont disposées de manière déportée de l'unité de commande de réseau radio, RNC, vers la station de base, BS.

22. Système de communication selon la revendication 21, **caractérisé en ce que** des moyens de signalisation correspondants sont prévus dans la station de base et l'équipement d'utilisateur afin de permettre une signalisation appropriée.

23. Système de communication selon la revendication 21 ou 22, **caractérisé en ce qu'**il est prévu des blocs de transport de signalisation spéciaux, STB, et deux formats de blocs de transport différents.

24. Produit de programme informatique, **caractérisé en ce qu'**après chargement, il permet à la mémoire d'un système de traitement de données de mettre en oeuvre un procédé selon une ou plusieurs des revendications 1 à 20 en association avec un système de communication qui est conçu conformément à une norme UMTS.
